# EUROPEAN PATENT SPECIFICATION

(11) **EP 2 883 100 B1**
(45) Date of publication and mention of the grant of the patent: **01.05.2019**
(21) Application number: 13765517.1
(22) Date of filing: 02.08.2013
(51) Int. Cl.: G02B 6/44

(54) **FIBER OPTIC SPLICING ASSEMBLY**
FASEROPTISCHE SPLEISSANORDNUNG
ENSEMBLE DE CONNEXION À FIBRE OPTIQUE

(30) Priority: 07.08.2012 CN 201210280488
(43) Date of publication of application: 17.06.2015
(73) Proprietor: ADC Telecommunications (Shanghai) Distribution Co., Ltd., Shanghai (CN); ADC Communications (Australia) Pty. Limited, Berkeley Vale NSW 2261 (AU)
(72) Inventor: XIAO, Teller, Shanghai (CN); YANG, Yanhong, Shanghai (CN); WANG, Liming, Shanghai (CN); HUBBARD, Paul, Castle Hill New South Wales 2154 (AU)
(74) Representative: Grünecker Patent- und Rechtsanwälte PartG mbB
(86) International application number: PCT/IB2013/056339
(87) International publication number: WO 2014/024105

(56) References cited:
- CN-U- 202 583 564
- US-A1- 2008 011 514
- US-A1- 2008 315 030
- US-A1- 2010 074 587

## Description

### BACKGROUND OF THE INVENTION

### Field of the Invention

The present invention relates to a fiber optic splicing assembly, more particularly, relates to a fiber optic splicing assembly having a reel and being mountable to a mounting wall.

### Description of the Related Art

In an optical communication network, fibers from an external optical cable are coupled to respective individual user fibers by splicing so as to constitute the optical communication network. As an apparatus for splicing different fibers, a fiber optic enclosure is widely applied in the optical communication network, and adapted to splice fibers in various mounting conditions, for example, in air, in pipe, or in underground condition.

A conventional fiber optic splicing enclosure generally comprises a fiber storing device and a plurality of intermediate shafts provided on a tray. The fiber storing device is used to store a redundant fiber, and the plurality of intermediate shafts are used to mount fiber optic splicing devices, for example, mechanical splicing devices, fusion splicing devices, etc., for coupling different fibers.

However, the fiber storing device of the conventional fiber optic splicing enclosure is not adapted to store an optical cable having a diameter larger than that of the fiber. Thereby, a predetermined length of redundant optical cable must be reserved outside the splicing
enclosure according to an arrangement of the splicing enclosure and a support panel for supporting the splicing enclosure. On the one hand, if the reserved redundant optical cable is too short, it may have a disadvantageous effect on the splicing of fibers. On the other hand, if the reserved redundant optical cable is too long, it may be hard to maintain and manage the optical cable and its fiber.

As for other conventional fiber optic splicing enclosures, although a reel for pre-storing the optical cable is provided therein, the reel cannot be embedded and mounted in a mounting wall. Accordingly, the reel is exposed outside the mounting wall and occupies a large volume, and it has a negative influence on the appearance of the enclosure.

CN 202583564 U discloses an optical fiber splice box which comprises a main box having a cutting portion for cutting a wall body. In the splice box disclosed in D1, a spool for storing an optical fiber is integrally and monolithically formed with a splicing panel of which a front side is configured to mount a fiber optic splicing device.

US 2010/074587 refers to a fiber optic enclosure including a housing and a cable spool assembly connected to an exterior of the housing. The spool assembly includes a drum portion and a strain relief post.

US 2008/011514 A1 describes a system and apparatus for storing an organizing optical fibers and fiber dispensing reel including a housing having multiple mandrels configured to receive one or more fiber dispending reels, as well as a wall module to be disposed at least partially in the hollow space of a wall.

### SUMMARY OF THE INVENTION

The present invention has been made to overcome or alleviate at least one aspect of the above mentioned disadvantages.

Accordingly, it is an object of the present invention to provide a fiber optic splicing assembly that can be quickly mounted to a mounting wall, and a reel of which for storing a redundant optical cable and/or fiber can be at least partly embedded in a mounting hole in the mounting wall.

Accordingly, it is another object of the present invention to provide a fiber optic splicing assembly, in which a reel of a fiber storing device has a retraction state where the reel is retracted into a mounting hole in a mounting wall and a expansion state where the reel is extended out of the mounting hole, facilitating the management and operation on the redundant optical cable and/or fiber.
According to an aspect of the present invention, there is provided a fiber optic splicing assembly mountable to a mounting wall with a mounting hole, comprising: a splicing panel of which a front side is configured to mount a fiber optic splicing device for splicing fibers; a fiber storing device configured to be at least partially received in the mounting hole,
wherein the fiber storing device comprises a bracket mounted to the mounting wall and a reel for pre-storing an optical cable and/or fiber, said reel being mounted on the bracket and being removably mounted to a rear side of the splicing panel, wherein the bracket comprises a support shaft, and the reel is movably sleeved onto the support shaft so that the reel is axially movable relative to the support shaft from a retraction state where the reel is located in the mounting hole to a expansion state where the reel is exposed outside the mounting hole; and when the reel is in the expansion state, an operator can unreel the optical cable or fiber stored on the reel from an outside of the mounting wall.

In the above-mentioned fiber optic splicing assembly, the reel is rotatably sleeved onto the support shaft.

In the above-mentioned fiber optic splicing assembly, the fiber storing device further comprises an intermediate shaft having a first end connected to the reel in a manner of being axially movable and a second end connected to the support shaft in a manner of being axially movable.

In the above-mentioned fiber optic splicing assembly, the reel is rotatably engaged to the first end of the intermediate shaft.

In the above-mentioned fiber optic splicing assembly, the intermediate shaft is slidably engaged to the support shaft in a profile matching manner so as to prevent the intermediate shaft from being rotated relative to the support shaft.

In the above-mentioned fiber optic splicing assembly, the intermediate shaft has a substantially tube-like structure and is slidably sleeved onto the support shaft.
In the above-mentioned fiber optic splicing assembly, a plurality of slide grooves extending in an axial direction are formed in one of an inner surface of the intermediate shaft and an outer surface of the support shaft; and a plurality of slide protrusions for being slidably fitted in respective slide grooves are formed on the other of the inner surface of the intermediate shaft and the outer surface of the support shaft.

In the above-mentioned fiber optic splicing assembly, the slide grooves are formed in the outer surface of the support shaft, and the slide protrusions are formed in the inner surface of the intermediate shaft adjacent to the first end.

In the above-mentioned fiber optic splicing assembly, the slide groove is provided with a first block projection and a first limit projection at a position adjacent to a free end of the support shaft; and when the reel is converted from the retraction state to the expansion state in a first slide direction, the first block projection is locked with the slide protrusion to block the intermediate shaft from being disengaged from the free end, and the first limit projection is snapped with the slide protrusion to limit the intermediate shaft from being slid in a second slide direction opposite to the first slide direction.

In the above-mentioned fiber optic splicing assembly, the slide grooves comprise at least one first slide groove and at least one second slide groove, and the slide protrusions comprise at least one first slide protrusion and at least one second slide protrusion; the first slide groove is provided with a first block projection at a position adjacent to a free end of the support shaft, and the second slide groove is provided with a first limit projection at a position adjacent to the free end of the support shaft; and when the reel is converted from the retraction state to the expansion state in a first slide direction, the first block projection is locked with the first slide protrusion to block the intermediate shaft from being disengaged from the free end, and the first limit projection is snapped with the second slide protrusion to limit the intermediate shaft from sliding in a second slide direction opposite to the first slide direction.

In the above-mentioned fiber optic splicing assembly, the first end of the intermediate shaft is engaged into a cylindrical body of the reel in a manner of being axially movable.

In the above-mentioned fiber optic splicing assembly, the cylindrical body is provided with a ring protrusion inside a first end thereof, and the ring protrusion is rotatably fitted with the outer surface of the intermediate shaft adjacent to the first end of the intermediate shaft.

In the above-mentioned fiber optic splicing assembly, a plurality of second block projections are provided on the first end of the intermediate shaft, and the second block projection is configured to lock with a side edge of the ring protrusion far away from the first end of the cylindrical body so as to block the reel from being disengaged from the first end of the intermediate shaft when the reel is converted from the retraction state to the expansion state.

In the above-mentioned fiber optic splicing assembly, a plurality of second limit projections are provided on the ring protrusion, and a ring groove is formed in the outer surface of the intermediate shaft, and the second limit projection is configured to snap with the ring groove so as to limit the intermediate shaft from sliding in a second slide direction opposite to a first slide direction when the reel is converted from the retraction state to the expansion state in the first slide direction.

In the above-mentioned fiber optic splicing assembly, a ring skirt portion is provided inside a second end of the cylindrical body, and a gap is formed between the ring skirt portion and an inner wall of the cylindrical body; and when the reel is in the retraction state, the ring skirt portion is located between the second end of the intermediate shaft and the free end of the support shaft, so that the reel is rotatable relative to the support shaft and the intermediate shaft.

In the above-mentioned fiber optic splicing assembly, a ring limit projection is formed on the ring skirt portion, and a third limit projection is provided on the free end of the support shaft, and the ring limit projection is snapped with the third limit projection so as to limit the reel from being moved far away from the intermediate shaft when the reel is in the retraction state.

In the above-mentioned fiber optic splicing assembly, the bracket comprising: a base on which the support shaft is supported; and a plurality of support arms extending from an edge of the base, wherein the bracket is mounted to the mounting wall by means of the support arms.

In the above-mentioned fiber optic splicing assembly, a free end of the support arm is provided with a flange capable of being engaged to a front side of the mounting wall.

In the above-mentioned fiber optic splicing assembly, the flange is provided with a fixation pin capable of being inserted into the mounting wall.

In the above-mentioned fiber optic splicing assembly, the bracket further comprises a plurality of groups of positioning devices extending from an edge of the support arms, and the positioning devices and the support arms are arranged alternately.

In the above-mentioned fiber optic splicing assembly, each group of positioning devices comprises a plurality of positioning elastic sheets having different length with each other.

In the above-mentioned fiber optic splicing assembly, the positioning elastic sheet is provided with a positioning projection.

In the above-mentioned fiber optic splicing assembly, the support arm is flexible, and a circumference formed by the support arms has an outer diameter larger than a diameter of the mounting hole; and when the support arms are mounted into the mounting hole, the support arms are elastically deformed and exert an elastic stress on the mounting hole to fix the support arms in the mounting hole.

In the above-mentioned fiber optic splicing assembly, the base is provided with a plurality of elastic pieces inwardly protruded.

In the above-mentioned fiber optic splicing assembly, the fiber storing device further comprises an intermediate shaft having a first end rotatably and axial-slidably connected to the support shaft and a second end axial-movably connected to the reel.

In the above-mentioned fiber optic splicing assembly, a plurality of slide grooves extending in an axial direction are formed in one of an inner surface of the reel and an outer surface of the support shaft; and a plurality of slide protrusions for being slidably fitted in respective slide grooves are formed on the other of the inner surface of the reel and the outer surface of the support shaft.

In the above-mentioned fiber optic splicing assembly, a plurality of slide grooves extending in an axial direction are formed in one of an outer surface of the reel and an inner surface of the support shaft; and a plurality of slide protrusions for being slidably fitted in respective slide grooves are formed on the other of the outer surface of the reel and the inner surface of the support shaft.

In the above-mentioned fiber optic splicing assembly, the bracket is further formed with an engagement portion fixed to the splicing panel in a snap-fit manner.

In the above-mentioned fiber optic splicing assembly, the splicing panel is provided with at least two installation holes for fixing the splicing panel on the mounting wall in cooperation with screws.

In the fiber optic splicing assembly mountable to a mounting wall according to the above mentioned various exemplary embodiments of the present invention, since the reel of the fiber storing device has a retraction state where the reel is retracted into the mounting hole in the mounting wall and a expansion state where the reel is extended out of the mounting hole, the optical cable and/or fiber having a sufficient length can be pre-stored in the reel before installing the splicing panel, facilitating the operator to quickly unreel the optical cable or fiber from the fiber optic splicing assembly in the maintenance and management operation after the fiber optic splicing assembly has been mounted to the mounting wall.

### BRIEF DESCRIPTION OF THE DRAWINGS

The above and other features of the present invention will become more apparent by describing in detail exemplary embodiments thereof with reference to the accompanying drawings, in which:
Fig.1 is an exploded view of a fiber optic splicing assembly according to an exemplary embodiment of the present invention;
Fig.2 is a side view of the fiber optic splicing assembly of Fig.1, wherein the fiber optic splicing assembly is mounted to a mounting wall and is not fixed to the mounting wall, and a reel thereof is in a retraction state;
Fig.3 is a perspective view of the fiber optic splicing assembly of Fig.2 when viewing from a rear side of the mounting wall;
Fig.4 is a perspective view of the fiber optic splicing assembly of Fig.2 when viewing from a front side of the mounting wall;
Fig.5 is a perspective view of the fiber optic splicing assembly of Fig.4 when a cover is removed;
Fig.6 is a side view of the fiber optic splicing assembly of Fig.1, wherein the fiber optic splicing assembly is mounted to a mounting wall, and a reel of it is in an expansion state;
Fig.7 is a perspective view of the fiber optic splicing assembly of Fig.6 when viewing from a rear side of the mounting wall;
Fig.8 is a perspective view of a bracket of the fiber optic splicing assembly of the present invention when viewing in a direction;
Fig.9 is a perspective view of the bracket of the fiber optic splicing assembly of the present invention when viewing in another direction;
Fig.10 is a perspective view of a reel of the fiber optic splicing assembly of the present invention;
Fig.11 is a cross section view of the reel shown in Fig.10;
Fig.12 is a perspective view of an intermediate shaft of the fiber optic splicing assembly of the present invention;
Fig.13 is a cross section view of the intermediate shaft shown in Fig.12;
Fig.14 is a cross section view of the fiber optic splicing assembly of Fig.4 taken in a line A-A according to the present invention;
Fig.15 is a cross section view of the fiber optic splicing assembly of Fig.6 taken in a line B-B according to the present invention;
Fig.16 is a cross section view of the fiber optic splicing assembly of Fig.6 taken in a line C-C according to the present invention; and
Fig.17 is a cross section view of the fiber optic splicing assembly of Fig.6 taken in a line D-D according to the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

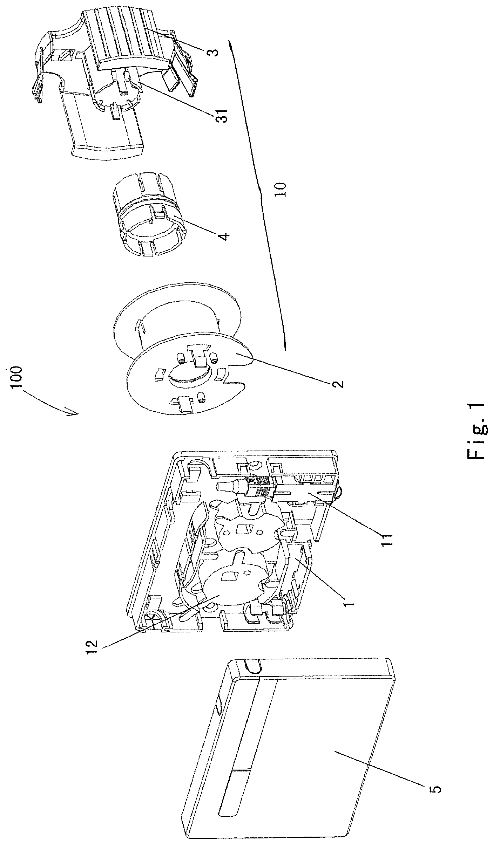

Fig.1 is an exploded view of a fiber optic splicing assembly 100 according to an exemplary embodiment of the present invention. The fiber optic splicing assembly 100 may be applied to splice fibers of different optical cables according to a general invention concept.

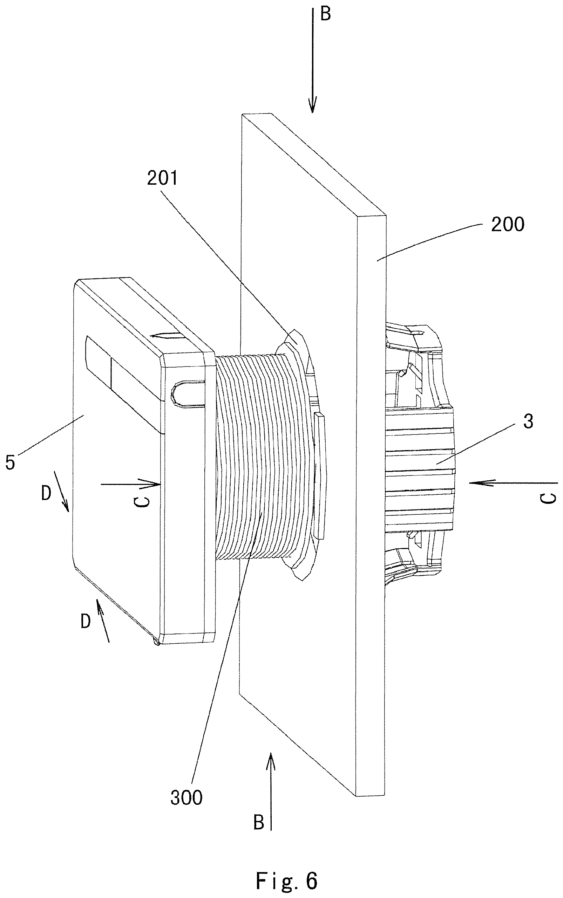

As shown in Fig.1, the fiber optic splicing assembly 100 of the present invention may be mounted to a mounting wall 200 with a mounting hole 201 (please refer to Fig.6). The fiber optic splicing assembly 100 mainly comprises a splicing panel 1 and a fiber storing device 10.

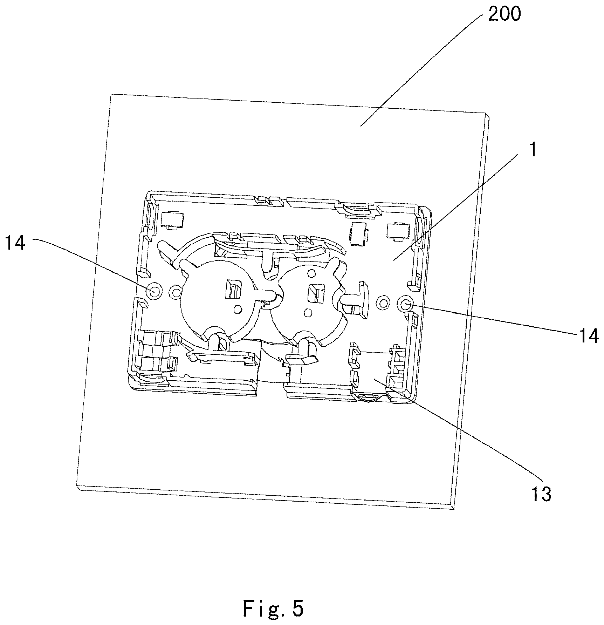

As shown in Fig.1 and Fig.5, the splicing panel 1 may be constructed as a conventional splicing panel. In the illustrated embodiment of Fig.1, the splicing panel 1 comprises a fiber optic splicing device 11 for splicing fibers, a mounting assembly for mounting the fiber optic splicing device 11, and a storing device 12 for storing a redundant fiber. Also, the fiber optic splicing assembly 100 further comprises a cover 5 covered on the splicing panel 1.

As shown in Figs. 1-7, in a fiber optic splicing assembly 100 according to an exemplary embodiment of the present invention, a rear side of the splicing panel 1 is removably mounted on a front side of the mounting wall 200, and a front side of the splicing panel 1 is configured to mount the fiber optic splicing device 11 for splicing fibers. The fiber storing device 10 is configured to be at least partially received in the mounting hole 201, and one end of the fiber storing device 10 is removably mounted to the splicing panel 1.

The fiber storing device 10 comprises a reel 2. The reel 2 is removably mounted to the rear side of the splicing panel 1. An optical cable and/or fiber to be spliced is pre-stored on the reel 2, for example, by winding. The fiber storing device 10 further comprises a bracket 3 on which the reel 2 is mounted. The bracket 3 is configured to mount the fiber storing device 10 to the mounting wall 200, for example, on the rear side of the mounting wall 200.

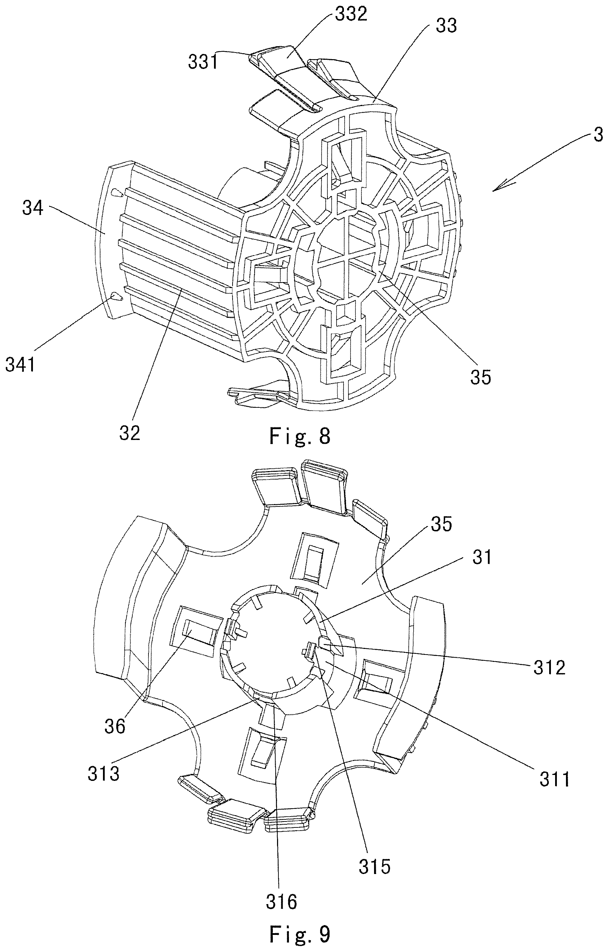

The bracket 3 comprises a support shaft 31 having a free end (please refer to Fig.9), and the reel 2 is movably sleeved onto the support shaft 31 so that the reel 2 can be axially moved relative to the support shaft 31 from a retraction state where the reel 2 is located in the mounting hole 201 to a expansion state where the reel 2 is exposed outside the mounting hole 201. When the reel 2 is in the expansion state, an operator can unreel the optical cable or fiber stored on the reel 2 from an outside of the mounting wall 200. Furthermore, the reel 2 is rotatably sleeved onto the support shaft 31 and is received in the bracket 3.

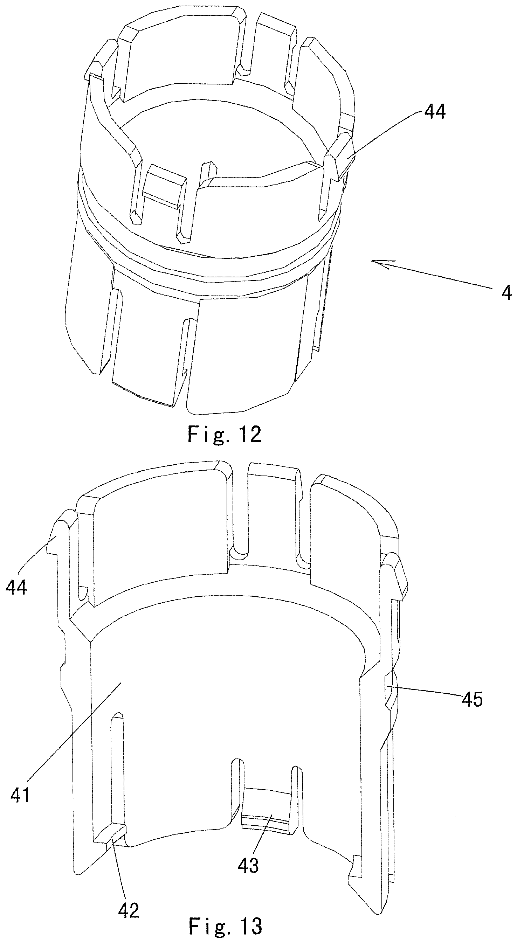

The fiber storing device 10 of the fiber optic splicing assembly 100 further comprises an intermediate shaft 4 having a first end movably connected to the reel 2 in an axial direction (that is, a direction in which the reel 2 is retracted and expanded) and a second end movably connected to the support shaft 31 in the axial direction. By adjusting the length of the intermediate shaft 4, the operator may pull the reel 2 to a position outside the mounting wall 200 where a redundant optical cable or fiber can be easily reeled on or unreeled from the reel 2. In an exemplary embodiment of the present invention, the reel 2 is configured to be capable of being moved through the mounting hole 201 (please refer to Fig.6) from the rear side to the front side of the mounting wall 200 along the support shaft 31 so as to reach the expansion state. The intermediate shaft 4 is engaged to the support shaft 31 in a manner of being axially movable, and the first end (a left end shown in Fig.1, or an upper end shown in Fig.13) of the intermediate shaft 4 is rotatably engaged to the reel 2.

Also, the intermediate shaft 4 is slidably engaged to the support shaft 31 in a profile matching manner, that is, the intermediate shaft 4 and the support shaft 31 have structures mated with each other in shape. In this way, it can prevent the intermediate shaft 4 from being rotated relative to the support shaft 31.

As shown in Figs.1, 12 and 13, the intermediate shaft 4 has a substantially tube-like structure and is slidably sleeved onto the support shaft 31. Furthermore, a plurality of slide grooves extending in the axial direction are formed in one of an inner surface of the intermediate shaft 4 and an outer surface of the support shaft 31, and a plurality of slide protrusions for being slidably fitted in respective slide grooves are formed on the other of the inner surface of the intermediate shaft 4 and the outer surface of the support shaft 31.

In an exemplary embodiment of the present invention, the slide grooves are formed in the outer surface of the support shaft 31, and the slide protrusions are formed in the inner surface of the intermediate shaft 4 adjacent to the first end (a lower end shown in Fig.13). In this way, the intermediate shaft 4 can be slid in the axial direction with the slide protrusions fitted in the respective slide grooves of the support shaft 31, and cannot be rotated relative to the support shaft 31 because of the blocking function of the slide protrusions. It should be appreciated that, in an alternative embodiment, the slide protrusions may be formed in the outer surface of the support shaft 31, and the slide grooves may be formed in the inner surface of the intermediate shaft 4 adjacent to the first end.

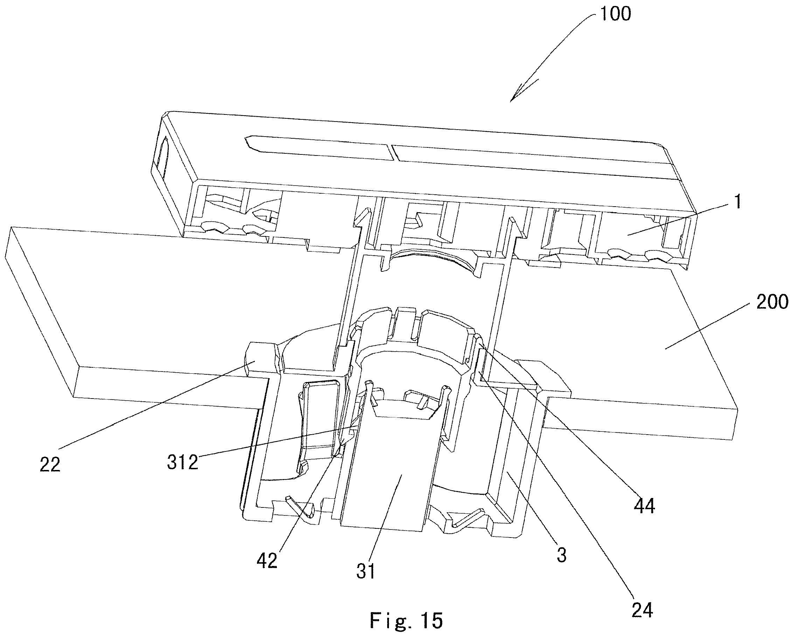

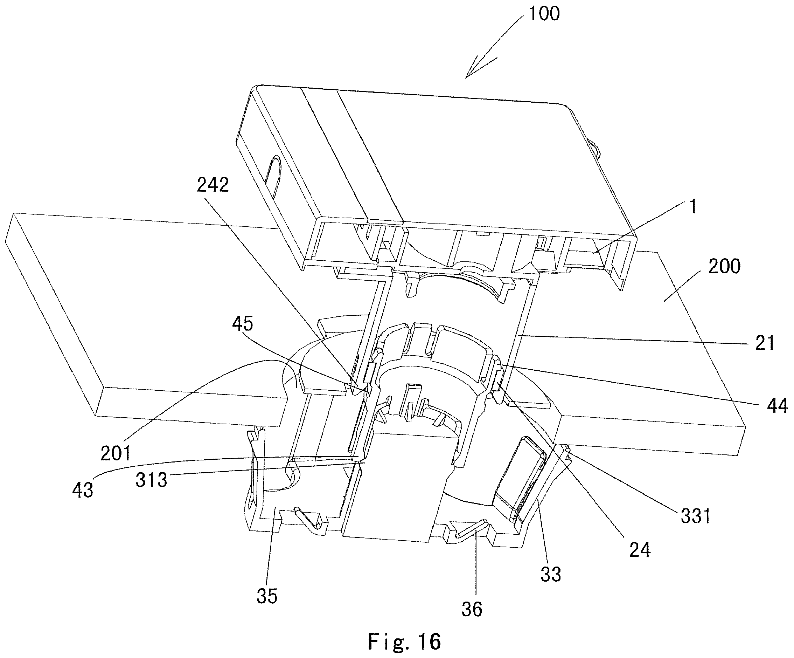

Further, please refer to Figs.6, 8, 9, 12-13 and 15-16, the slide grooves formed in the support shaft 31 comprise at least one first slide groove 311 and at least one second slide groove 316, and the slide protrusions formed on the inner surface of the intermediate shaft 4 comprise at least one first slide protrusion 42 and at least one second slide protrusion 43. During converting the reel 2 from the retraction state to the expansion state or from the expansion state to the retraction state, the first slide protrusion 42 and the second slide protrusion 43 are slid in the first slide groove 311 and the second slide groove 316, respectively, and block the intermediate shaft 4 from being rotated relative to the support shaft 31. The first slide groove 311 is provided with a first block projection 312 at a position adjacent to the free end (a tip end) of the support shaft 31, and the second slide groove 316 is provided with a first limit projection 313 at a position adjacent to the free end of the support shaft 31. In this way, when the reel 2 is converted from the retraction state to the expansion state in a first slide direction (an upward direction of Figs. 15 and 16), the first block projection 312 is locked with the first slide protrusion 42 (Fig. 15) to block the intermediate shaft 4 from being disengaged from the free end of the support shaft 31, and the first limit projection 313 is snapped with the second slide protrusion 43 (Fig. 16) to limit the intermediate shaft 4 from being slid in a second slide direction (a downward direction of Fig.16) opposite to the first slide direction.

Referring to Figs. 13 and 15, the first block projection 312 and the first limit projection 313 each has a matching surface substantially perpendicular to the axial direction, therefore, once the first block projection 312 is matched with the first slide protrusion 42 by sliding the intermediate shaft 4, the intermediate shaft 4 cannot be further moved forward regardless of an force exerted on it unless a matching structure of the first block projection 312 and the first slide protrusion 42 is broken. That is, the first block projection 312 is matched with the first slide protrusion 42 in a lock-fit manner.

As shown in Figs. 13 and 16, the first limit projection 313 and the second slide protrusion 43 each has a matching surface inclined to the axial direction, therefore, during sliding the intermediate shaft 4 from the retraction state to the expansion state, a relative large force is exerted on it in the first slide direction so that the second slide protrusion 43 can slide across the first limit projection 313 due to a flexible deformation of the second slide protrusion 43 and then position the intermediate shaft 4 in the expansion state. Thereafter, when the force is removed, the first limit projection 313 limits the second slide protrusion 43 from being moved in the second slide direction (a downward direction of Fig.16) opposite to the first slide direction. But it is appreciated that the limitation of the first limit projection 313 to the second slide protrusion 43 can be released and that the intermediate shaft 4 can be moved downward as shown in Fig.16 when a relative large force is exerted on the intermediate shaft 4 in the second slide direction. That is, the first limit projection 313 is matched with the second slide protrusion 43 in a snap-fit manner.

Although it has been described that the first and second slide protrusions 42, 43 are provided in different slide grooves in the above embodiments, the present invention is not limited to this. In an alternative embodiment, each of the slide grooves is provided with a first block projection and a first limit projection at a position adjacent to a free end of the support shaft, when the reel 2 is converted from the retraction state to the expansion state in a first slide direction, the first block projection is locked with the slide protrusion to block the intermediate shaft from being disengaged from the free end, and the first limit projection is snapped with the slide protrusion to limit the intermediate shaft from being slid in a second slide direction opposite to the first slide direction.

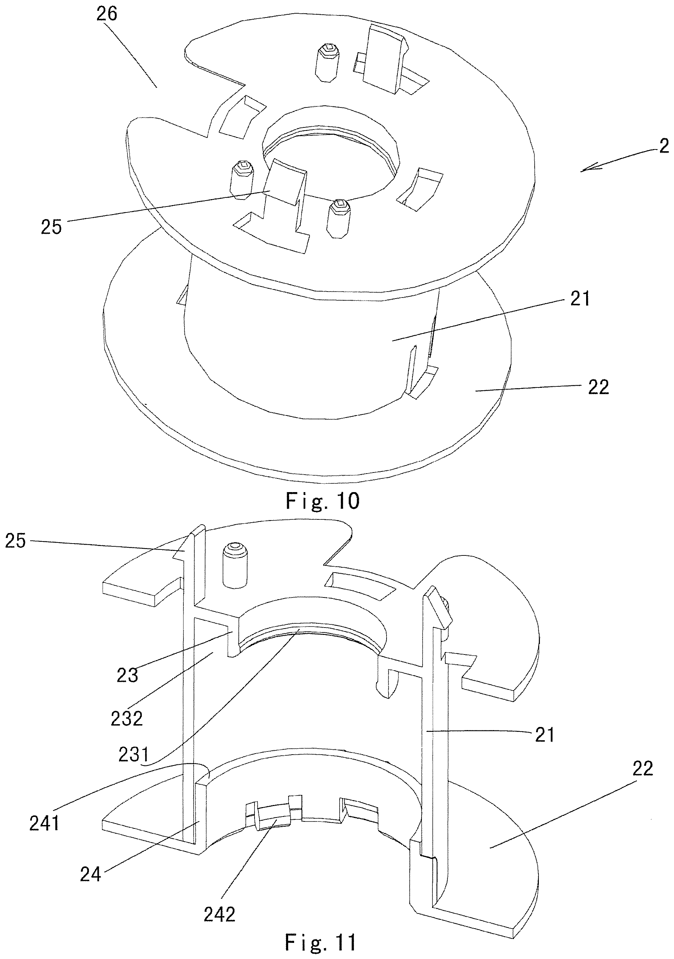

In a fiber optic splicing assembly 100 according to a further embodiment of the present invention, please refer to Figs. 10 and 11, the reel 2 comprises a cylindrical body 21 and flanges 22 formed at both ends of the cylindrical body 21. A notch 26 is formed in the flange 22 for the optical cable or fiber passing therethrough. The first end (an upper end of Figs.12 and 13) of the intermediate shaft 4 is engaged into the cylindrical body 21 of the reel 2 in a manner of being axially movable.

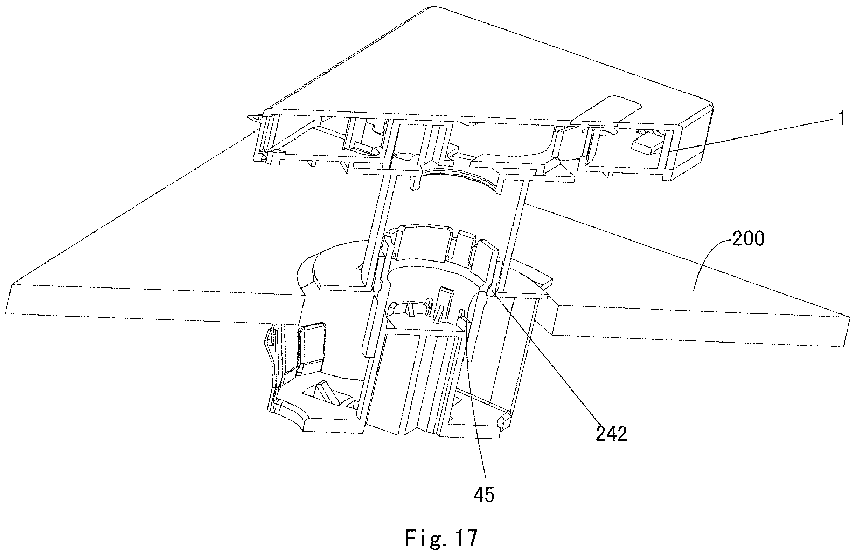

Please refer to Fig.17, the cylindrical body 21 is provided with a ring protrusion 24 inside a first end (a lower end of Figs. 10 and 11) of the cylindrical body 21, the ring protrusion 24 is rotatably fitted with the outer surface of the intermediate shaft 4 adjacent to the first end of the intermediate shaft 4.

As shown in Figs. 10-11 and 14, an engagement portion 25 is formed on and extended from the cylindrical body 21 of the reel 2 for fixing the reel 2 to the splicing panel 1 in a snap-in manner.

Further, referring to Figs. 12-13 and 15-16 again, a plurality of second block projections 44 are provided on the first end (an upper end in Figs. 12, 13) of the intermediate shaft 4, and the second block projections 44 are configured to lock with a side edge 241 of the ring protrusion 24 far away from the first end (a lower end in Figs. 10, 11) of the cylindrical body 21 so as to block the reel 2 from being disengaged from the first end of the intermediate shaft 4 when the reel 2 is in the expansion state. The second block projections 44 and the side edge 241 each has a matching surface substantially perpendicular to the axial direction.

On the other hand, a plurality of second limit projections 242 are provided on the ring protrusion 24, and a ring groove 45 is formed in the outer surface of the intermediate shaft 4. When the reel 2 is converted from the retraction state to the expansion state in the first slide direction, the second limit projection 242 is snapped with the ring groove 45 so as to limit the intermediate shaft 4 from being slid in the second slide direction opposite to the first slide direction.

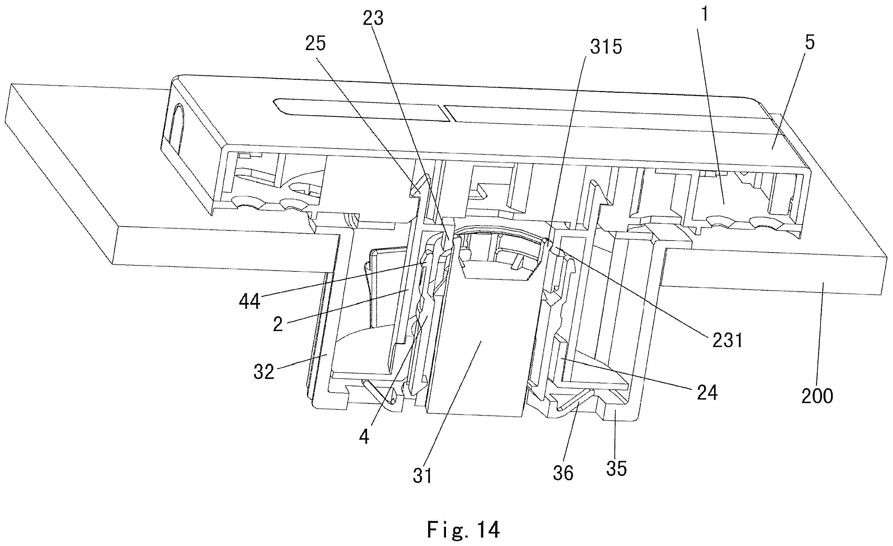

Furthermore, referring to Figs.10-11 and 14, a ring skirt portion 23 is provided inside a second end (an upper end in Figs. 10, 11) of the cylindrical body 21, and there is a gap 232 between the ring skirt portion 23 and an inner wall of the cylindrical body 21. When the reel 2 is in the retraction state, the ring skirt portion 23 is located between the second end of the intermediate shaft 4 and the free end of the support shaft 31 (as shown in Fig. 14), so that the reel 2 can be rotated relative to the support shaft 31 and the intermediate shaft 4.

A ring limit projection 231 is formed on the ring skirt portion 23, and a third limit projection 315 (referring to Fig.9) is provided on the free end of the support shaft 31. The ring limit projection 231 is snapped with the third limit projection 315 so as to limit the reel 2 from being moved far away from the intermediate shaft 4 when the reel 2 is in the retraction state. In this way, the reel 2 can be stably received in the bracket 3.

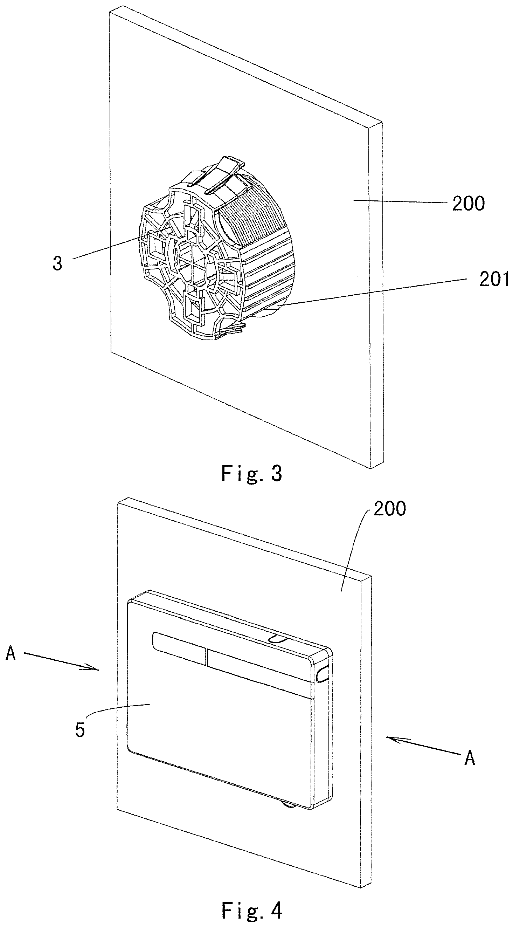

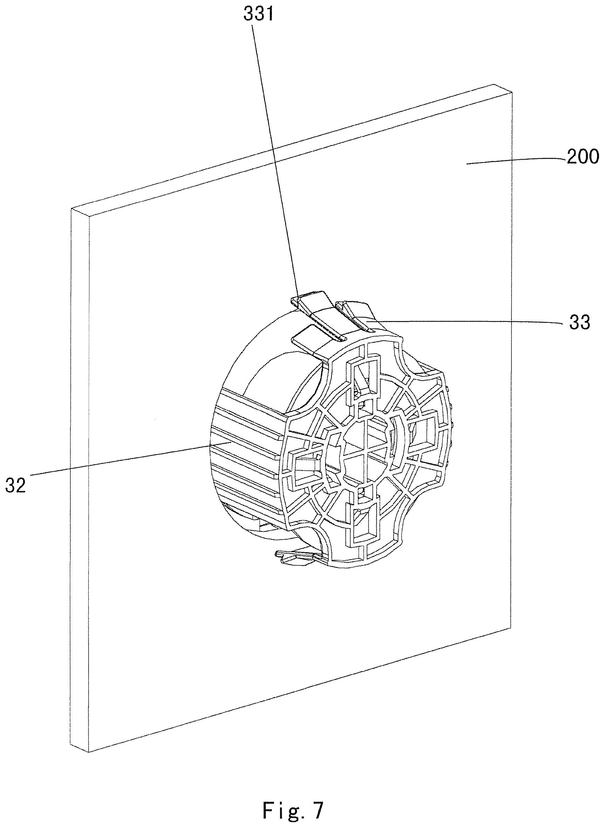

In a fiber optic splicing assembly 100 according to a further embodiment of the present invention, the bracket 3 comprises a base 35 and a plurality of support arms 32. The support shaft 31 is supported on the base 35. A plurality of support arms 32 extend from an edge of the base 35. The bracket 3 is mounted to the mounting wall 200 by means of the support arms 32. Furthermore, a free end of the support arm 32 is provided with a flange 34 which is capable of being engaged to a front side of the mounting wall 200. The flange 34 is provided with a plurality of fixation pin 341 which are capable of being inserted into the mounting wall 200. The bracket 3 further comprises a plurality of groups of positioning devices 33 extending from an edge of the base 35, and the positioning devices 33 and the support arms 32 are arranged alternately. Each group of positioning devices 33 comprises a plurality of positioning elastic sheets 331 having different length with each other. Also, the positioning elastic sheet 331 is provided with a positioning projection 332. In this way, please refer to Figs.3 and 7, when the fiber optic splicing assembly 100 of the present invention is mounted on the mounting wall 200, the fiber optic splicing assembly 100 is forced to pass through the mounting hole 201 from the front side of the mounting wall 200 to the rear side of the mounting wall 200, or the support arms 32 are slightly contracted inwardly to pass through the mounting hole 201 from the rear side of the mounting wall 200 to the front side of the mounting wall 200, and the flange 34 is fixed onto the front side of the mounting wall 20 with the fixation pin 341 of the flange 34. At the same time, the positioning elastic sheets 331 of the positioning devices 33 are abut against the rear side of the mounting wall 200. If the mounting wall 200 has a large thickness, the positioning elastic sheets 331 having a larger length are inserted into the mounting hole 201, and the positioning projections 332 of the positioning elastic sheets 331 are abut against the rear side of the mounting 200, so that the bracket 3 can be reliably mounted on the mounting wall 200.

In an alternative embodiment of the present invention, the support arm 32 is elastic, and a circumference formed by the support arms 32 has an outer diameter larger than a diameter of the mounting hole 201. When the support arms 32 are mounted into the mounting hole 201, the support arms are elastically deformed and exert an elastic stress on the mounting hole 201 to fix the support arms 32 in the mounting hole 201.

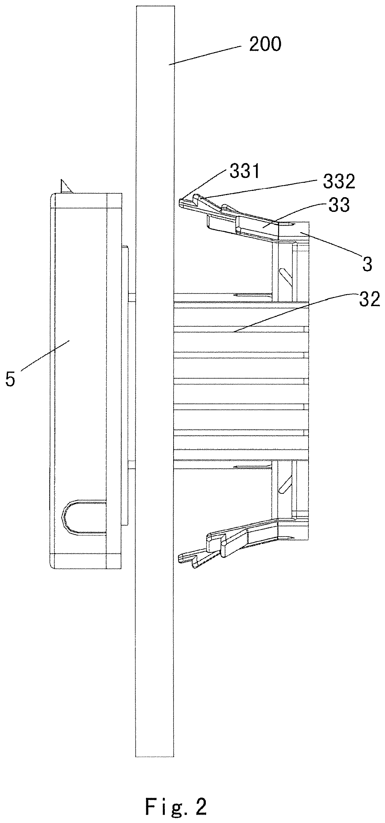

As shown in Figs.9 and 14, in a further exemplary embodiment of the present invention, the base 35 is provided with a plurality of elastic pieces 36 inwardly protruded. As shown in Figs.2 and 5, two installation holes 14 are formed in the splicing panel 1. When the reel 2 is received in the bracket 3 and when the splicing panel 1 is not fixed to the mounting wall 200 yet, the reel 2 is still relatable relative to the support shaft 31. During rotating the reel 2, the rear side of the splicing panel 1 is separated from the front side of the mounting wall 200 by a certain distance by means of the elastic pieces 36. Accordingly, it can prevent the surface of the mounting wall 200 from being scraped by the splicing panel 1 during rotating the splicing panel 1, while ensuring the stable rotation of the splicing panel 1. The splicing panel 1 is provided with at least two installation holes 14 for fixing the splicing panel 1 on the mounting wall 200 in cooperation with screws (not shown). After the splicing panel 1 is mounted on the mounting wall 200 by means of the installation holes 14, as shown in Figs.3-5, by screwing the screws, the elastic pieces 36 are compressed, and the gap between the rear side of the splicing panel 1 and the front side of the mounting wall 200 can be eliminated, so that the splicing panel 1 is reliably mounted on the mounting wall 200.

Although it has been described that the intermediate shaft 4 is not rotatable relative to the support shaft 31 and that the reel 2 is rotatable relative to the intermediate shaft 4 in the above embodiments, the present invention is not limited to this. In a fiber optic splicing assembly according to another exemplary embodiment of the present invention, the intermediate shaft has a first end which is rotatably and axial-slideably connected to the support shaft and a second end which is axial-movably connected to the reel and not rotated with respect to the reel.

In a further alternative exemplary embodiment, the reel may be directly slidably connected to the support shaft. For example, a plurality of slide grooves extending in the axial direction are formed in one of an inner surface of the reel and an outer surface of the support shaft, and a plurality of slide protrusions for being slidably fitted in respective slide grooves are formed on the other of the inner surface of the reel and the outer surface of the support shaft.

In the fiber optic splicing assembly described in the above embodiments, the reel may be retracted to the rear side of the mounting wall and expanded to the front side of the mounting wall, facilitating the maintenance and management operation on the redundant optical cable and/or fiber. During mounting the splicing panel, the optical cable or fiber may be pre-stored in the reel. The optical cable or fiber may be unreeled out of the reel in use and spliced to other devices without calculating the length of the optical cable or fiber to be used, thereby achieving a quick splicing operation. The bracket for receiving the reel may be mounted on various mounting walls, for example, plasterboards, with different thicknesses. Also, the reel is still rotatable in the bracket under the retraction state where it is received in the bracket. In addition, the reel is rotatable relative to the support shaft under the expansion state where it is expanded out of the bracket to the front side of the mounting wall, so that the optical cable or fiber can be unreeled from the reel. Furthermore, in the retraction state, the reel and the bracket both are mounted on the rear side of the mounting wall, and only the splicing panel having a thinner thickness is protruded outside the front side of the mounting wall, saving the space and having a good appearance.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle, so that more kinds of fiber optic splicing assemblies can be achieved with overcoming the technical problem of the present invention.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A fiber optic splicing assembly (100) mountable to a mounting wall (200) with a mounting hole (201), comprising:
a splicing panel (1) of which a front side is configured to mount a fiber optic splicing device (11) for splicing fibers;
a fiber storing device (10) configured to be at least partially received in the mounting hole,
wherein the fiber storing device (10) comprises a bracket (3) mountable to the mounting wall (200) and a reel (2) for pre-storing an optical cable and/or fiber, said reel (2) being mounted on the bracket (3) and being removably mounted to a rear side of the splicing panel (1), wherein the bracket (3) comprises a support shaft (31), and the reel (2) is movably sleeved onto the support shaft (31) so that the reel (2) is axially movable relative to the support shaft (31) from a retraction state where the reel (2) is located in the mounting hole (201) to a expansion state where the reel (2) is exposed outside the mounting hole (201); and wherein when the reel (2) is in the expansion state, an operator can unreel the optical cable or fiber stored on the reel (2) from an outside of the mounting wall (200).

2. The fiber optic splicing assembly according to claim 1, wherein the reel (2) is rotatably sleeved onto the support shaft (31).

3. The fiber optic splicing assembly according to claim 2,
wherein the fiber storing device (10) further comprises an intermediate shaft (4) having a first end connected to the reel (2) in a manner of being axially movable and a second end connected to the support shaft (31) in a manner of being axially movable, or having a first end connected to the support shaft in a manner of rotatable and axially slideable and a second end connected to the reel in a manner of axially movable.

4. The fiber optic splicing assembly according to claim 3,
wherein the reel (2) is rotatably engaged to the first end of the intermediate shaft (4).

5. The fiber optic splicing assembly according to claim 4, wherein
a) the intermediate shaft (4) is slidably engaged to the support shaft (31) in a profile matching manner so as to prevent the intermediate shaft (4) from being rotated relative to the support shaft (31); or
b) the intermediate shaft (4) has a substantially tube-like structure and is slidably sleeved onto the support shaft (31); or
c) the first end of the intermediate shaft (4) is engaged into a cylindrical body of the reel (2) in a manner of being axially movable.

6. The fiber optic splicing assembly according to claim 5, item b),
wherein a plurality of slide grooves extending in an axial direction are formed in one of an inner surface of the intermediate shaft (4) and an outer surface of the support shaft (31); and
wherein a plurality of slide protrusions for being slidably fitted in respective slide grooves are formed on the other of the inner surface of the intermediate shaft (4) and the outer surface of the support shaft (31).

7. The fiber optic splicing assembly according to claim 6,
wherein the slide grooves are formed in the outer surface of the support shaft (31), and the slide protrusions are formed in the inner surface of the intermediate shaft (4) adjacent to the first end; and wherein preferably:
- the slide groove is provided with a first block projection (312) and a first limit projection (313) at a position adjacent to a free end of the support shaft; and wherein when the reel (2) is converted from the retraction state to the expansion state in a first slide direction, the first block projection (312) is locked with the slide protrusion to block the intermediate shaft (4) from being disengaged from the free end, and the first limit projection (313) is snapped with the slide protrusion to limit the intermediate shaft (4) from sliding in a second slide direction opposite to the first slide direction; or
- the slide grooves comprise at least one first slide groove and at least one second slide groove, and the slide protrusions comprise at least one first slide protrusion and at least one second slide protrusion; wherein the first slide groove is provided with a first block projection at a position adjacent to a free end of the support shaft, and the second slide groove is provided with a first limit projection at a position adjacent to the free end of the support shaft; and wherein when the reel (2) is converted from the retraction state to the expansion state in a first slide direction, the first block projection (312) is locked with the first slide protrusion to block the intermediate shaft (4) from being disengaged from the free end, and the first limit projection (313) is snapped with the second slide protrusion to limit the intermediate shaft (4) from sliding in a second slide direction opposite to the first slide direction.

8. The fiber optic splicing assembly according to claim 5, item c,
wherein the cylindrical body is provided with a ring protrusion (24) inside a first end thereof, and
wherein the ring protrusion is rotatably fitted with the outer surface of the intermediate shaft adjacent to the first end of the intermediate shaft.

9. The fiber optic splicing assembly according to claim 8,
wherein a plurality of second block projections are provided on the first end of the intermediate shaft, and the second block projection is configured to lock with a side edge of the ring protrusion far away from the first end of the cylindrical body so as to block the reel from being disengaged from the first end of the intermediate shaft when the reel is converted from the retraction state to the expansion state.

10. The fiber optic splicing assembly according to claim 9, wherein
a) a plurality of second limit projections are provided on the ring protrusion, and a ring groove is formed in the outer surface of the intermediate shaft, and wherein the second limit projection is configured to snap with the ring groove so as to limit the intermediate shaft from slide in a second slide direction opposite to a first slide direction when the reel is converted from the retraction state to the expansion state in the first slide direction; and/or
b) a ring skirt portion is provided inside a second end of the cylindrical body, and a gap is formed between the ring skirt portion and an inner wall of the cylindrical body; and wherein when the reel is in the retraction state, the ring skirt portion is located between the second end of the intermediate shaft and the free end of the support shaft, so that the reel is rotatable relative to the support shaft and the intermediate shaft, and wherein preferably a ring limit projection is formed on the ring skirt portion, and a third limit projection is provided on the free end of the support shaft, and wherein preferably the ring limit projection is snapped with the third limit projection so as to limit the reel from being moved far away from the intermediate shaft when the reel is in the retraction state.

11. The fiber optic splicing assembly according to claim 3, wherein the bracket comprises:
a base on which the support shaft is supported, wherein the base is preferably provided with a plurality of elastic pieces inwardly protruded; and
a plurality of support arms extending from an edge of the base,
wherein the bracket is mounted to the mounting wall by means of the support arms.

12. The fiber optic splicing assembly according to claim 11, wherein:
- a free end of the support arm is provided with a flange capable of being engaged to a front side of the mounting wall, wherein the flange is preferably provided with a fixation pin capable of being inserted into the mounting wall; and/or
- wherein the support arm is elastic, and a circumference formed by the support arms has an outer diameter larger than a diameter of the mounting hole; and wherein when the support arms are mounted into the mounting hole, the support arms are elastically deformed and exert an elastic stress on the mounting hole to fix the support arms in the mounting hole.

13. The fiber optic splicing assembly according to claim 11 or 12,
wherein the bracket further comprises a plurality of groups of positioning devices extending from an edge of the support arms, and
wherein the positioning devices and the support arms are arranged alternately,
wherein preferably each group of positioning devices comprises a plurality of positioning elastic sheets having different length with each other, and
wherein most preferably the positioning elastic sheet is provided with a positioning projection.

14. The fiber optic splicing assembly according to claim 1,
wherein a plurality of slide grooves extending in an axial direction are formed in one of an inner surface of the reel and an outer surface of the support shaft; and
wherein a plurality of slide protrusions for being slidably fitted in respective slide grooves are formed on the other of the inner surface of the reel and the outer surface of the support shaft, and
wherein preferably a plurality of slide grooves extending in an axial direction are formed in one of an outer surface of the reel and an inner surface of the support shaft; and
wherein preferably a plurality of slide protrusions for being slidably fitted in respective slide grooves are formed on the other of the outer surface of the reel and the inner surface of the support shaft.

15. The fiber optic splicing assembly according to claim 1,
wherein the bracket is further formed with an engagement portion fixed to the splicing panel in a snap-fit manner.

## Patentansprüche

1. Faseroptische Spleißanordnung (100), die an einer Montagewand (200) mit einem Montageloch (201) anbringbar ist, umfassend:
eine Spleißplatte (1), deren Vorderseite dazu eingerichtet ist, eine faseroptische Spleißvorrichtung (11) zum Spleißen von Fasern zu montieren;
eine Faservorhaltevorrichtung (10), die dazu eingerichtet ist, wenigstens teilweise in dem Montageloch aufgenommen zu werden,
wobei die Faservorhaltevorrichtung (10) eine Konsole (3), die an der Montagewand (200) anbringbar ist, und eine Spule (2) zum Vorhalten eines optischen Kabels und/oder einer optischen Faser umfasst, wobei die Spule (2) an der Konsole (3) montiert ist und abnehmbar an einer Rückseite der Spleißplatte (1) angebracht ist, wobei die Konsole (3) eine Tragwelle (31) aufweist und die Spule (2) derart beweglich auf die Tragwelle (31) aufgeschoben ist, dass die Spule (2) relativ zu der Tragwelle (31) axial von einem Rückzugszustand, in dem sich die Spule (2) in dem Montageloch (201) befindet, zu einem Expansionszustand bewegt werden kann, in dem die Spule (2) außerhalb des Montagelochs (201) freiliegt; wobei, wenn sich die Spule (2) in dem Expansionszustand befindet, eine Bedienperson das auf der Spule (2) vorgehaltene optische Kabel oder die optische Faser von einer Außenseite der Montagewand (200) abwickeln kann.

2. Faseroptische Spleißanordnung nach Anspruch 1, bei der die Spule (2) drehbar auf die Tragwelle (31) aufgeschoben ist.

3. Faseroptische Spleißanordnung nach Anspruch 2,
bei der die Faservorhaltevorrichtung (10) weiterhin eine Zwischenwelle (4) aufweist, die ein erstes Ende, das axial beweglich mit der Spule (2) verbunden ist, und ein zweites Ende aufweist, das auf eine Weise mit der Tragwelle (31) verbunden ist, die axial beweglich ist, oder ein erstes Ende, das drehbar und axial verschiebbar mit der Tragwelle verbunden ist, und ein zweites Ende aufweist, das axial beweglich mit der Spule verbunden ist.

4. Faseroptische Spleißanordnung nach Anspruch 3,
bei der die Spule (2) drehbar mit dem ersten Ende der Zwischenwelle (4) in Eingriff steht.

5. Faseroptische Spleißanordnung nach Anspruch 4, bei der
a) die Zwischenwelle (4) gleitendend mit der Tragwelle (31) in Eingriff steht, um zu verhindern, dass die Zwischenwelle (4) relativ zu der Tragwelle (31) gedreht wird; oder
b) die Zwischenwelle (4) eine im wesentlichen röhrenartige Struktur hat und verschiebbar auf der Tragwelle (31) angeordnet ist; oder
c) das erste Ende der Zwischenwelle (4) axial beweglich in einen zylindrischen Körper der Spule (2) eingreift.

6. Faseroptische Spleißanordnung nach Anspruch 5, Punkt b),
bei der eine Vielzahl von Gleitnuten, die sich in einer axialen Richtung erstrecken, auf einer Innenfläche der Zwischenwelle (4) oder einer Außenfläche der Tragwelle (31) ausgebildet ist; und
eine Vielzahl von Gleitvorsprüngen, die gleitend in jeweilige Gleitnuten eingepasst werden sollen, auf der anderen von der Innenfläche der Zwischenwelle (4) und der Außenfläche der Tragwelle (31) ausgebildet ist.

7. Faseroptische Spleißanordnung nach Anspruch 6,
bei der die Gleitnuten in der Außenfläche der Tragwelle (31) ausgebildet sind und die Gleitvorsprünge auf der Innenfläche der Zwischenwelle (4) neben dem ersten Ende ausgebildet sind; und vorzugsweise:
- die Gleitnut mit einem ersten Blockvorsprung (312) und einem ersten Begrenzungsvorsprung (313) an einer Position benachbart zu einem freien Ende der Tragwelle versehen ist; und wobei, wenn die Spule (2) in einer ersten Gleitrichtung aus dem Rückzugszustand in den Expansionszustand überführt wird, der erste Blockvorsprung (312) mit dem Gleitvorsprung verriegelt wird, um zu verhindern, dass sich die Zwischenwelle (4) von dem freien Ende löst, und der erste Begrenzungsvorsprung (313) mit dem Gleitvorsprung eingerastet wird, um zu verhindern, dass die Zwischenwelle (4) in einer zweiten Gleitrichtung entgegen der ersten Gleitrichtung gleitet; oder
- die Gleitnuten wenigstens eine erste Gleitnut und wenigstens eine zweite Gleitnut umfassen, und die Gleitvorsprünge wenigstens einen ersten Gleitvorsprung und wenigstens einen zweiten Gleitvorsprung umfassen; wobei die erste Gleitnut mit einem ersten Blockvorsprung an einer Position benachbart zu einem freien Ende der Tragwelle versehen ist und die zweite Gleitnut mit einem ersten Begrenzungsvorsprung an einer Position benachbart dem freien Ende der Tragwelle versehen ist; und, wenn die Spule (2) in einer ersten Gleitrichtung von dem Rückzugszustand in den Expansionszustand überführt wird, der erste Blockvorsprung (312) mit dem ersten Gleitvorsprung verriegelt wird um zu verhindern, dass sich die Zwischenwelle (4) von dem freien Ende löst, und der erste Begrenzungsvorsprung (313) mit dem zweiten Gleitvorsprung eingerastet wird um zu verhindern, dass die Zwischenwelle (4) in einer zweiten Gleitrichtung entgegen der ersten Gleitrichtung gleitet.

8. Faseroptische Spleißanordnung nach Anspruch 5, Punkt c).
bei der der zylindrische Körper innerhalb eines ersten Endes mit einem Ringvorsprung (24) versehen ist, und
der Ringvorsprung drehbar mit der Außenfläche an die Zwischenwelle benachbart zu dem ersten Ende der Zwischenwelle angepasst ist.

9. Faseroptische Spleißanordnung nach Anspruch 8,
bei der zahlreiche zweite Blockvorsprünge an dem ersten Ende der Zwischenwelle vorgesehen sind, und der zweite Blockvorsprung derart eingerichtet ist, dass er mit einer Seitenkante des Ringvorsprungs weit entfernt von dem ersten Ende des zylindrischen Körpers verriegelt um zu verhindern, dass sich die Spule von dem ersten Ende der Zwischenwelle löst, wenn die Spule vom Rückzugszustand in den Expansionszustand überführt wird.

10. Faseroptische Spleißanordnung nach Anspruch 9, bei der
a) zahlreiche zweite Begrenzungsvorsprünge an dem Ringvorsprung vorgesehen sind, und eine Ringnut in der Außenfläche der Zwischenwelle ausgebildet ist, und der zweite Begrenzungsvorsprung so konfiguriert ist, dass er in die Ringnut einrastet um zu verhindern, dass sich die Zwischenwelle in einer zweiten Gleitrichtung entgegengesetzt zu einer ersten Gleitrichtung verschiebt, wenn die Spule von dem Rückzugszustand in den Expansionszustand in der ersten Schieberichtung überführt wird; und/oder
b) ein Ringschürzenabschnitt innerhalb eines zweiten Endes des zylindrischen Körpers vorgesehen ist, und ein Spalt zwischen dem Ringschürzenabschnitt und einer Innenwand des zylindrischen Körpers ausgebildet ist; wobei, wenn sich die Spule im Rückzugszustand befindet, der Ringschürzenabschnitt zwischen dem zweiten Ende der Zwischenwelle und dem freien Ende der Tragwelle angeordnet ist, so dass die Spule relativ zu der Tragwelle und der Zwischenwelle drehbar ist, und vorzugsweise ein Ringbegrenzungsvorsprung an dem Ringschürzenabschnitt ausgebildet ist und ein dritter Begrenzungsvorsprung an dem freien Ende der Tragwelle vorgesehen ist, wobei vorzugsweise der Ringbegrenzungsvorsprung in den dritten Begrenzungsvorsprung einrastet um zu verhindern, dass die Spule weit von der Zwischenwelle weg bewegt wird, wenn sich die Spule in dem Rückzugszustand befindet.

11. Faseroptische Spleißanordnung nach Anspruch 3, bei der die Konsole umfasst:
eine Basis, auf der die Tragwelle gelagert ist, wobei die Basis vorzugsweise mit einer Vielzahl von nach innen ragenden elastischen Teilen versehen ist; und
mehrere Tragarme, die sich von einem Rand der Basis erstrecken,
wobei die Konsole mittels der Tragarme an der Montagewand montiert ist.

12. Faseroptische Spleißanordnung nach Anspruch 11, bei der:
- ein freies Ende des Tragarms mit einem Flansch versehen ist, der mit einer Vorderseite der Montagewand in Eingriff gebracht werden kann, wobei der Flansch vorzugsweise mit einem Befestigungsstift versehen ist, der in die Montagewand eingesetzt werden kann; und/oder
- der Tragarm elastisch ist und ein durch die Tragarme gebildeter Umfang einen Außendurchmesser hat, der größer als ein Durchmesser des Montagelochs ist; wobei, wenn die Tragarme in dem Montageloch montiert sind, die Tragarme elastisch verformt werden und eine elastische Belastung auf das Montageloch ausüben, um die Tragarme in dem Montageloch zu fixieren.

13. Faseroptische Spleißanordnung nach Anspruch 11 oder 12,
bei dem die Konsole weiterhin mehrere Gruppen von Positioniervorrichtungen umfasst, die sich von einer Kante der Tragarme erstrecken, und
die Positioniervorrichtungen und die Tragarme abwechselnd angeordnet sind,
wobei vorzugsweise jede Gruppe von Positioniervorrichtungen eine Vielzahl von elastischen Positionierungsblechen mit unterschiedlicher Länge aufweist, und
am bevorzugtesten das elastische Positionierungsblech mit einem Positionierungsvorsprung versehen ist.

14. Faseroptische Spleißanordnung nach Anspruch 1,
bei der eine Vielzahl von Gleitnuten, die sich in einer axialen Richtung erstrecken, in einer Innenfläche der Spule und einer Außenfläche der Tragwelle ausgebildet ist; und
eine Vielzahl von Gleitvorsprüngen, die gleitend in jeweilige Gleitnuten eingepasst werden sollen, auf der anderen von der Innenfläche der Spule und der Außenfläche der Tragwelle ausgebildet sind, und
vorzugsweise zahlreiche Gleitnuten, die sich in einer axialen Richtung erstrecken, in einer Außenfläche der Spule und einer Innenfläche der Tragwelle ausgebildet sind; und
vorzugsweise eine Vielzahl von Gleitvorsprüngen, die gleitend in jeweilige Gleitnuten eingepasst werden sollen, auf der anderen der Außenfläche der Spule und der Innenfläche der Tragwelle ausgebildet sind.

15. Faseroptische Spleißanordnung nach Anspruch 1,
bei der die Konsole weiterhin mit einem Eingriffsabschnitt ausgebildet ist, der an der Verbindungsplatte durch Einrasten befestigt ist.

## Revendications

1. Ensemble d'épissure de fibres optiques (100) susceptible d'être monté sur un mur de montage (200) avec un trou de support (201) comprenant:
un panneau d'épissure (1) dont une face avant est configurée pour monter un dispositif d'épissure de fibres optiques (11) pour épisser des fibres;
un dispositif de stockage de fibres (10) configuré pour se loger au moins partiellement dans le trou de montage,
dans lequel le dispositif de stockage de fibres (10) comprend un support (3) pouvant être monté sur la paroi de montage (200) et une bobine (2) pour pré-stocker un câble optique et/ou une fibre, ladite bobine (2) étant montée sur le support (3) et pouvant être posé de manière amovible sur un côté arrière du panneau d'épissure (1), le support (3) comprenant un arbre support (31) et la bobine (2) étant emmanchée de manière amovible sur l'arbre support (31) afin que la bobine (2) soit mobile axialement par rapport à l'arbre support (31) depuis un état de rétraction où la bobine (2) est située dans le trou de montage (201) vers un état d'expansion où la bobine (2) est exposée à l'extérieur du trou de montage (201); et dans lequel, lorsque la bobine (2) est à l'état d'expansion, un opérateur peut dérouler le câble optique ou la fibre stockée sur la bobine (2) depuis l'extérieur de la paroi de montage (200).

2. Ensemble d'épissure de fibres optiques selon la revendication 1, dans lequel la bobine (2) est emmanchée de manière rotative sur l'arbre support (31).

3. Ensemble d'épissure de fibres optiques selon la revendication 2,
dans lequel le dispositif de stockage de fibres (10) comprend en outre un arbre intermédiaire (4) ayant une première extrémité connectée à la bobine (2) de manière à pouvoir se déplacer axialement et une deuxième extrémité connectée à l'arbre de support (31) de manière à être mobile axialement, ou bien présentant une première extrémité connectée à l'arbre support de manière rotative et coulissante axialement et une deuxième extrémité connectée à la bobine de manière mobile axialement.

4. Ensemble d'épissure de fibres optiques selon la revendication 3,
dans lequel la bobine (2) est engagée en rotation avec la première extrémité de l'arbre intermédiaire (4).

5. Ensemble d'épissure de fibres optiques selon la revendication 4, dans lequel
a) l'arbre intermédiaire (4) est engagé de manière coulissante dans l'arbre support (31) en alignant les profils afin d'empêcher la rotation de l'arbre intermédiaire (4) par rapport à l'arbre support (31); ou
b) l'arbre intermédiaire (4) a une structure sensiblement tubulaire et est gainé de manière coulissante sur l'arbre support (31); ou
c) la première extrémité de l'arbre intermédiaire (4) est engagée dans un corps cylindrique de la bobine (2) de manière mobile axialement.

6. Ensemble d'épissure de fibres optiques selon la revendication 5, paragraphe b),
dans lequel une pluralité de rainures de coulissement s'étendant dans une direction axiale sont formées dans une surface interne de l'arbre intermédiaire (4) ou bien dans une surface externe de l'arbre support (31); et
dans lequel une pluralité de protubérances de coulissement destinées à être ajustées de manière coulissante dans des rainures de coulissement respectives sont formées sur l'autre surface, soit la surface interne de l'arbre intermédiaire (4) soit la surface externe de l'arbre support (31).

7. Ensemble d'épissure de fibres optiques selon la revendication 6,
dans lequel les rainures de coulissement sont formées dans la surface externe de l'arbre support (31) et les protubérances de coulissement sont formées dans la surface interne de la tige intermédiaire (4) adjacente à la première extrémité; et dans lequel de préférence:
la rainure de coulissement est pourvue d'une première saillie de bloc (312) et d'une première saillie de limite (313) en une position adjacente à une extrémité libre de l'arbre support; et dans lequel, lorsque la bobine (2) passe de l'état de rétraction à l'état d'expansion dans une première direction de coulissement, la première saillie de bloc (312) est verrouillée avec la protubérance de coulissement afin d'empêcher l'arbre intermédiaire (4) de se désengager du extrémité libre, et la première saillie de limite (313) est encliquetée avec la protubérance de coulissement pour empêcher l'arbre intermédiaire (4) de glisser dans une deuxième direction de coulissement opposée à la première direction de coulissement; ou
les rainures de coulissement comprennent au moins une première rainure de coulissement et au moins une deuxième rainure de coulissement, et les protubérances de coulissement comprennent au moins une première protubérance de coulissement et au moins une deuxième protubérance de coulissement; dans lequel la première rainure de coulissement est munie d'une première saillie de bloc en une position adjacente à une extrémité libre de l'arbre support, et la deuxième rainure de coulissement est munie d'une première saillie de limite à une position adjacente à l'extrémité libre de l'arbre support; et dans lequel, lorsque la bobine (2) passe de l'état de rétraction à l'état d'expansion dans une première direction de coulissement, la première saillie de bloc (312) est verrouillée avec première la protubérance de coulissement afin d'empêcher l'arbre intermédiaire (4) de se désengager du extrémité libre, et la première saillie de limite (313) est encliquetée avec la deuxième protubérance de coulissement pour empêcher l'arbre intermédiaire (4) de glisser dans une deuxième direction de coulissement opposée à la première direction de coulissement.

8. Ensemble d'épissure de fibres optiques selon la revendication 5, paragraphe c),
dans lequel le corps cylindrique est pourvu d'une saillie annulaire (24) à l'intérieur de sa première extrémité, et
dans lequel la saillie annulaire est ajustée de manière rotative avec la surface externe de l'arbre intermédiaire adjacente à la première extrémité de l'arbre intermédiaire.

9. Ensemble d'épissure de fibres optiques selon la revendication 8,
dans lequel une pluralité de deuxièmes saillies de bloc sont prévues sur la première extrémité de l'arbre intermédiaire, et la deuxième saillie de bloc est configurée pour se verrouiller avec un bord latéral de la saillie annulaire loin de la première extrémité du corps cylindrique de manière à empêcher la bobine de se désengager de la première extrémité de l'arbre intermédiaire lorsque la bobine est convertie de l'état de rétraction à l'état d'expansion.

10. Ensemble d'épissure de fibres optiques selon la revendication 9, dans lequel
a) une pluralité de deuxièmes saillies limites sont prévues sur la saillie annulaire, et une rainure annulaire est formée dans la surface externe de l'arbre intermédiaire et dans lequel la deuxième saillie limite est configurée pour s'encliqueter avec la rainure annulaire de manière à limiter le mouvement de l'arbre intermédiaire de coulissement dans une deuxième direction de coulissement opposée à une première direction de coulissement lorsque la bobine passe de l'état de rétraction à l'état d'expansion dans la première direction de coulissement; et/ou
b) une partie jupe annulaire est prévue à l'intérieur d'une deuxième extrémité du corps cylindrique et un espace est formé entre la partie jupe annulaire et une paroi interne du corps cylindrique; et
dans lequel, lorsque la bobine est à l'état de rétraction, la partie jupe annulaire est située entre la deuxième extrémité de l'arbre intermédiaire et l'extrémité libre de l'arbre support, de sorte que la bobine est rotative par rapport à l'arbre support et à l'arbre intermédiaire, et dans lequel de préférence une saillie de limite annulaire est formée sur la partie jupe annulaire et une troisième saillie de limite est prévue sur l'extrémité libre de l'arbre support, et dans lequel de préférence la saillie de limite annulaire est encliquetée avec la troisième saillie de limite, afin de limiter l'éloignement de la bobine par rapport à l'arbre intermédiaire lorsque la bobine est à l'état de rétraction.

11. Ensemble d'épissure de fibres optiques selon la revendication 3, dans lequel le support comprend:
un socle sur lequel repose l'arbre support, le socle étant de préférence muni d'une pluralité de pièces élastiques faisant saillie vers l'intérieur; et
une pluralité de bras de support s'étendant depuis un bord du socle,
dans lequel le support est monté sur le mur de montage au moyen des bras de support.

12. Ensemble d'épissure de fibres optiques selon la revendication 11, dans lequel:
une extrémité libre du bras de support est munie d'une bride susceptible de s'engager sur un côté avant de la paroi de montage, la bride étant de préférence munie d'une broche de fixation susceptible de s'insérer dans la paroi de montage; et/ou
dans lequel le bras de support est élastique, et une circonférence formée par les bras de support présente un diamètre externe supérieur à un diamètre du trou de montage; et dans lequel, lorsque les bras de support sont montés dans le trou de montage, les bras de support sont déformés élastiquement et exercent une contrainte élastique sur le trou de montage pour fixer les bras de support dans le trou de montage.

13. Ensemble d'épissure de fibres optiques selon les revendications 11 ou 12,
dans lequel le support comprend en outre une pluralité de groupes de dispositifs de positionnement s'étendant depuis un bord des bras de support, et
dans lequel les dispositifs de positionnement et les bras de support sont disposés en alternance,
dans lequel de préférence chaque groupe de dispositifs de positionnement comprend une pluralité de feuilles élastiques de positionnement ayant des longueurs différentes les unes des autres, et
dans lequel le plus préférablement, la feuille élastique de positionnement est munie d'une saillie de positionnement.

14. Ensemble d'épissure de fibres optiques selon la revendication 1,
dans lequel une pluralité de rainures de coulissement s'étendant dans une direction axiale sont formées dans une surface interne de la bobine ou bien dans une surface externe de l'arbre support; et
dans lequel une pluralité de protubérances de coulissement destinées à être ajustées de manière coulissante dans des rainures de coulissement respectives sont formées sur l'autre surface, soit la surface interne de la bobine soit la surface externe de l'arbre support, et
dans lequel de préférence une pluralité de rainures de coulissement s'étendant dans une direction axiale sont formées dans une surface externe de la bobine ou bien dans une surface interne de l'arbre support; et
dans lequel de préférence une pluralité de protubérances de coulissement destinées à être ajustées de manière coulissante dans des rainures de coulissement respectives sont formées sur l'autre surface, soit la surface externe de la bobine soit la surface interne de l'arbre support.

15. Ensemble d'épissure de fibres optiques selon la revendication 1,
dans lequel le support est en outre formé avec une partie d'engagement fixée au panneau d'épissure en un tournemain.
